# EUROPEAN PATENT SPECIFICATION

(11) **EP 0 645 561 B1**
(45) Date of publication and mention of the grant of the patent: **10.12.1997**
(21) Application number: 94115224.1
(22) Date of filing: 27.09.1994
(51) Int. Cl.: F16H 61/06

(54) **Control system for automatic transmissions**
Steuerungssystem für automatische Getriebe
Système de commande pour transmissions automatiques

(30) Priority: 29.09.1993 JP 243365/93
(43) Date of publication of application: 29.03.1995
(73) Proprietor: AISIN AW CO., LTD., Anjo-shi Aichi-ken 444-11 (JP)
(72) Inventor: Tsukamoto, Kazumasa, Anjo-Shi, Aichi-ken (JP); Ando, Masahiko, Anjo-Shi, Aichi-ken (JP); Hayabuchi, Masahiro, Anjo-Shi, Aichi-ken (JP); Kano, Toshihiro, Anjo-Shi, Aichi-ken (JP)
(74) Representative: VOSSIUS & PARTNER

(56) References cited:
- EP-A- 0 354 004
- DE-A- 4 138 080
- US-A- 5 088 357
- PATENT ABSTRACTS OF JAPAN vol. 8, no. 120 (M-300) 6 June 1984 & JP-A-59 026 660 (AISHIN WARNER) 10 February 1984

## Description

The present invention relates to a control system for an automatic transmission.

In the prior art, the automatic transmission is equipped with a transmission composed of a gear train, such that the rotation is transmitted to a predetermined gear element of the gear train and is extracted from another gear element. For these operations, there are arranged a plurality of frictional engagement elements such as clutches and brakes, which are applied and/or released to transmit the rotation selectively between the individual gear elements thereby to establish a gear stage corresponding to the combination of the gear elements.

The frictional engagement elements are individually equipped with corresponding hydraulic servos. A shift can be effected to a predetermined gear stage, for example, by newly feeding the oil to the hydraulic servo having no oil feed to apply the corresponding frictional engagement element and by draining the oil from the hydraulic servo having the oil feed to release the corresponding frictional engagement element.

In case, for example, the vehicle is to be run at a 2nd speed in a D-range by the automatic transmission having the aforementioned construction, the brake for the D-range is applied. In case, however, the vehicle is to be run at the 2nd speed while effecting the engine brake, the engine braking brake is applied in addition to the D-range brake.

Specifically, in the case of running the vehicle at the 2nd speed in the D-range, a sun gear to be rotated backwards is locked, but the torque necessary for the application is low. This makes it sufficient to apply the D-range brake only. In case, however, the vehicle is to be run at the 2nd speed while effecting the engine brake, not only the torque for locking the sun gear but also a reverse torque for effecting the engine brake is applied so that the torque necessary increases to an extremely high level. As a result, not only the brake for the D-range but also the brake for the engine brake is applied.

Incidentally, there has been proposed (in Japanese Patent Publication No. 40576/1992) a control system for an automatic transmission, in which a brake capacity is changed according to the engine load by applying not only the brake for the D-range but also the brake for the engine brake, when the engine load is high, and by applying the brake for the D-range only, when the engine load is low.

Thus, the number of friction discs of the D-range brake is reduced to make it possible to reduce the size, to suppress the shifting shock and to improve the durability of the friction discs.

In the control system for the automatic transmission of the prior art, however, the shifting time is elongated because the two brakes are to be simultaneously applied.

Specifically, when a clutch or brake is to be applied, the corresponding hydraulic servo is fed with the oil through an orifice, and the oil pressure (as will be called the "apply pressure") in the hydraulic servo is raised while being adjusted by an accumulator. In case, however, the two brakes are to be simultaneously applied, as described above, the two hydraulic servos have to be fed with the oil. This elongates the time period for the individual hydraulic servos to be filled up with the oil, and accordingly not only the time period from the decision of a shift to the start of brake application but also the time period from the start of brake application to the end of application. As a result of the elongation of the shifting time period, the shift feeling is deteriorated.

The present invention has an object to solve the problems of the control system for the automatic transmission of the prior art and to provide a control system for an automatic transmission, which can shorten the shifting time, even in case two or more frictional engagement elements are to be simultaneously applied, thereby to improve the shift feeling.

According to the present invention, therefore, there is provided an automatic transmission comprising: a transmission coupled to and driven by an engine for effecting a shift by applying/releasing a plurality of frictional engagement elements selectively by a plurality of hydraulic servos; a vehicle speed sensor for detecting a vehicle speed; a throttle opening sensor for detecting a throttle opening; electronic control means for outputting a shift signal on the basis of the detected signals coming from said two sensors; and a hydraulic circuit for actuating solenoid valves in response to the shift signal of said electronic control means for feeding an oil pressure selectively to said plurality of hydraulic servos corresponding to individual gear stages so that said plurality of frictional engagement elements may be individually applied/released to establish each of said gear stages, wherein said plurality of hydraulic servos include: a first hydraulic servo adapted to be fed with the oil pressure for effecting a shift to a target gear stage; and a second hydraulic servo adapted to be fed with the oil pressure for effecting a shift to said target gear stage, wherein said hydraulic circuit includes: a limit oil feed circuit for feeding the oil pressure through oil limit means; a quick oil feed circuit for feeding the oil pressure not through said oil limit means; an oil passage switch valve adapted to be switched for connecting said limit oil feed circuit and said quick oil feed circuit selectively to said first hydraulic servo and said second hydraulic servo; and a first solenoid valve for switching said oil passage switch valve in response to the signal of said electronic control means, and wherein said electronic control means includes: power ON/OFF decide means for deciding the magnitude of an engine load on the basis of the detected signal of said throttle opening sensor; and valve switch means for feeding such a signal to said first solenoid valve as to switch said oil passage switch valve such that the oil pressure of said quick oil feed circuit is fed to said first hydraulic servo and said second hydraulic servo, when it is decided by said power ON /OFF decide means that the engine load is high, whereas the oil pressure of said limit oil feed circuit is fed to at least said first hydraulic servo when it is decided that the engine load is low.

Thus, the individual brakes corresponding to the first hydraulic servo and the second hydraulic servo can be simultaneously applied. As a result, the number of friction discs of the brake is reduced to make it possible to reduce the size, to suppress the shifting shock and to improve the durability of the friction discs.

When the engine load is high, on the other hand, the oil of the quick oil feed circuit is quickly fed not through the oil limit means to the first hydraulic servo and second hydraulic servo so that the time period for the oil to fill up is shortened. This shortens not only the time period from the decision of a shift to the start of application of the individual brakes corresponding to the first hydraulic servo and the second hydraulic servo but also the time period from the start of engagement of the individual brakes to the end of engagement. As a result, the shifting time can be shortened to improve the shift feeling.
Fig. 1 is a diagram showing a hydraulic circuit in an embodiment of the present invention;
Fig. 2 is a schematic diagram showing an automatic transmission of the present invention;
Fig. 3 is a diagram enumerating the operations of the automatic transmission of the present invention;
Fig. 4 is a schematic diagram showing a control system for an automatic transmission according to the embodiment of the present invention;
Fig. 5 is a block diagram showing the control system of the automatic transmission according to the embodiment of the present invention;
Fig. 6 is a main flow chart illustrating the quick control operations of the control system of the automatic transmission according to the embodiment of the present invention;
Fig. 7 is a flow chart illustrating a power ON/OFF decide processing subroutine in the embodiment of the present invention;
Fig. 8 is a first flow chart illustrating a shift decide processing subroutine in the embodiment of the present invention;
Fig. 9 is a second flow chart illustrating a shift decide processing subroutine in the embodiment of the present invention;
Fig. 10 is a diagram illustrating a first example of a limit map in the embodiment of the present invention;
Fig. 11 is a diagram illustrating a second example of the limit map in the embodiment of the present invention;
Fig. 12 is a flow chart illustrating a target gear stage read processing subroutine in the embodiment of the present invention;
Fig. 13 is a diagram illustrating a manual switch in the embodiment of the present invention;
Fig. 14 is a diagram enumerating a shift position decide table in the embodiment of the present invention;
Fig. 15 is a diagram illustrating a shift map in the embodiment of the present invention;
Fig. 16 is a flow chart illustrating a pattern decide processing subroutine in the embodiment of the present invention;
Fig. 17 is a first flow chart illustrating valve switch processing, application pressure control processing and shift situation decide processing subroutines in the embodiment of the present invention;
Fig. 18 is a second flow chart illustrating the valve switch processing, application pressure control processing and shift situation decide processing subroutines in the embodiment of the present invention;
Fig. 19 is a time chart illustrating a first shift pattern in the embodiment of the present invention;
Fig. 20 is a time chart illustrating a second shift pattern in the embodiment of the present invention;
Fig. 21 is a time chart illustrating a third shift pattern in the embodiment of the present invention;
Fig. 22 is a time chart illustrating a fourth shift pattern in the embodiment of the present invention:
Fig. 23 is a time chart illustrating a fifth shift pattern in the embodiment of the present invention;
Fig. 24 is a time chart illustrating a sixth shift pattern in the embodiment of the present invention; and
Fig. 25 is a time chart illustrating a seventh shift pattern in the embodiment of the present invention.

An embodiment of the present invention will be described in detail in the following with reference to the accompanying drawings.

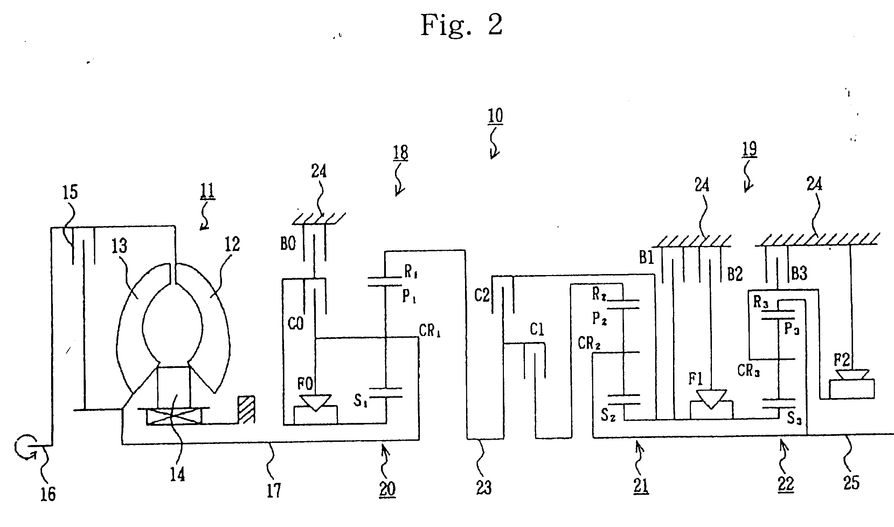

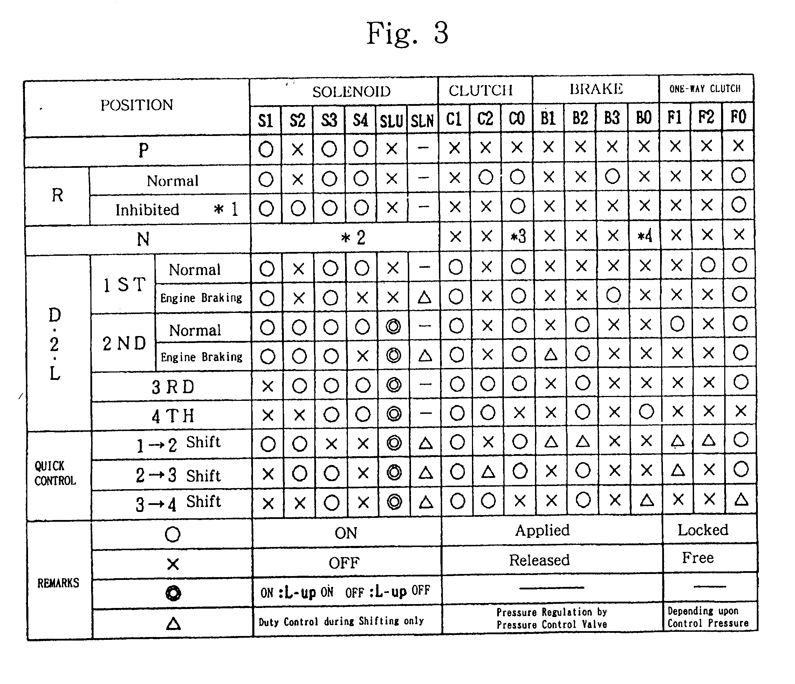

Fig. 2 is a schematic diagram showing an automatic transmission of the present invention, and Fig. 3 is a diagram enumerating the operations of the automatic transmission of the present invention.

In Fig. 2, the automatic transmission is constructed of a transmission (T/M) 10 and a torque converter 11. The rotation to be generated by the not-shown engine is transmitted through the torque converter 11 to the transmission 10, by which it is shifted so that it is transmitted to the not-shown drive wheels.

The torque converter 11 is composed of a pump impeller 12, a turbine runner 13 and a stator 14, and in addition a lockup clutch 15 for improving the power transmission efficiency. The rotation of an input member 16 or the output shaft of the engine is transmitted to an input shaft 17 of the transmission 10 either indirectly by the flow of the oil in the torque converter 11 or directly by locking the lockup clutch 15.

On the other hand, the transmission 10 is composed of an auxiliary transmission unit 18 and a main transmission unit 19, the former of which is equipped with an overdrive planetary gear unit 20 and the latter of which is equipped with a front planetary gear unit 21 and a rear planetary gear unit 22.

Here, the overdrive planetary gear unit 20 is composed of: a carrier CR₁ connected to the input shaft 17 and supporting a pinion P₁; a sun gear S₁ enclosing the input shaft 17; and a ring gear R₁ connected to an input shaft 23 of the main transmission unit 19. Moreover, the carrier CR₁ and the sun gear S₁ are connected through a third clutch CO and a third one-way clutch FO, and the sun gear S₁ and a casing 24 are connected through a fourth brake BO.

On the other hand, the front planetary gear unit 21 is composed of: a carrier CR₂ connected to an output shaft 25 and supporting a pinion P₂; a sun gear S₂ enclosing the output shaft 25 and made integral with a sun gear S₃ of the rear planetary gear unit 22; and a ring gear R₂ connected to the input shaft 23 through a first clutch C1. Moreover, the input shaft 23 and the sun gear S₂ are connected through a second clutch C2, and the sun gear S₂ and the casing 24 are connected through a first brake B1 made of a band brake. The sun gear S₂ and the casing 24 are further connected through a first one-way clutch F1 and a second brake B2.

Moreover, the rear planetary gear unit 22 is composed of a carrier CR₃ supporting a pinion P₃, and a ring gear R₃ made integral with the sun gear S₃ and the output shaft 25. The carrier CR₃ and the casing 24 are connected through a third brake B3 and a second one-way clutch F2 arranged in parallel with each other.

The automatic transmission has its solenoid valves S1 to S4, linear solenoid valves SLU and SLN, first clutch C1, second clutch C2, third clutch C0, first brake B1, second brake B2, third brake B3, fourth brake B0, first one-way clutch F1, second one-way clutch F2 and third one-way clutch F0 individually controlled, as enumerated in Fig. 3, in the individual gear stages of P-range, R-range, D-range, 2-range and L-range. Incidentally, at ∗1 in Fig. 3, the decision speed for inhibiting the running in the R-range is set to 20 [Km/h]. At ∗2, moreover, the solenoid valves S1 to S4 in the N-range are controlled according to the vehicle speed to take the solenoid pattern at the D-range time. Still moreover, the third clutch C0 is applied at the 1st to 3rd speeds, as indicated at ∗3, and the fourth brake B0 is applied at the 4th speed, as indicated at ∗4.

At the 1st speed in the D-range, 2nd range or L-range, moreover, the first clutch C1 and the third clutch C0 are applied to bring the 2nd one-way clutch F2 and the third one-way clutch F0 into the locked state. In the overdrive planetary gear unit 20, therefore, a direct coupled state is established through the third clutch C0 and the third one-way clutch F0 so that the rotation of the input shaft 17 is transmitted as it is to the input shaft 23 of the main transmission unit 19. In the main transmission unit 19, on the other hand, the rotation of the input shaft 23 is transmitted on one hand through the first clutch C1 to the ring gear R₂ of the front planetary gear unit 21 and further to the carrier CR₂ and the output shaft 25 integral with the carrier CR₂, to rotate the carrier CR₃ of the rear planetary gear unit 22 through the sun gears S₂ and S₃. However, the carrier CR₃ is blocked from rotation because the second one-way clutch F2 is blocked. As a result, the pinion P₃ rotates on its axis to transmit its decelerated rotation to the ring gear R₃ integral with the output shaft 25.

At the 2nd speed in the D-range, 2nd-range or L-range, on the other hand, the first clutch C1, the third clutch C0 and the second brake B2 are applied to bring the first one-way clutch F1 and the third one-way clutch F0 into the locked state. In the overdrive planetary gear unit 20, therefore, the direct coupled state is maintained so that the rotation of the input shaft 17 is transmitted as it is to the input shaft 23 of the main transmission unit 19. In the main transmission unit 19, on the other hand, the rotation of the input shaft 23 is transmitted through the first clutch C1 to the ring gear R₂ of the front planetary gear unit 21 to rotate the sun gear S₂ through the pinion P₂. However, this rotation of the sun gear S₂ is blocked because the first one-way clutch F1 is brought into the locked state by the application of the second brake B2. As a result, the carrier CR₂ rotates while allowing the pinion P₂ to rotate on its axis, so that the rotation of the 2nd speed is transmitted to the output shaft 25 only through the front planetary gear unit 21.

At the 3rd speed in the D-range, 2nd-range or L-range, on the other hand, the first clutch C1, the second clutch C2, the third clutch C0 and the second brake B2 are applied to bring the third one-way clutch F0 into the locked state. In the overdrive planetary gear unit 20, therefore, the direct coupled state is maintained so that the rotation of the input shaft 17 is transmitted as it is to the input shaft 23 of the main transmission unit 19. In the main transmission unit 19, on the other hand, the first clutch C1 and the second clutch C2 are applied to bring the front planetary gear unit 21 into the direct coupled state so that the rotation of the input shaft 23 is transmitted as it is to the output shaft 25.

At the 4th speed, i.e., the highest speed in the D-range, 2nd range or L-range, on the other hand, the first clutch C1, the second clutch C2, the second brake B2 and the fourth brake B0 is are applied. In the main transmission unit 19, the third clutch C0 is released, and the fourth brake B0 is applied. As a result, the overdrive planetary gear unit 20 has its sun gear S₁ locked by the application of the fourth brake B0, and the pinion P₁ rotates on its axis together with the carrier CR₁, to transmit the rotation to the ring gear R₁ so that the overdrive rotation is transmitted to the input shaft 23 of the main transmission unit 19 in the direct coupled state.

Here will be described the control system of the automatic transmission.

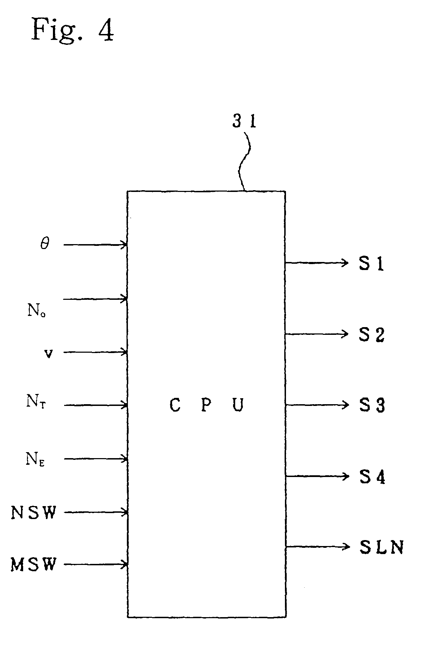

Fig. 4 is a schematic diagram showing the control system of the automatic transmission according to an embodiment of the present invention.

In Fig. 4, reference numeral 31 designates a CPU for controlling the entirety of the control system of the automatic transmission. This CPU 31 is fed with a throttle opening θ , an output R.P.M. Nₒ, a vehicle speed v, an input R.P.M. N_{T} and an engine R.P.M. N_{E} as individual detected signals. Incidentally, reference letters NSW designate a neutral switch signal, and letters MSW designate a manual switch signal.

On the other hand, the CPU 31 controlled the solenoid valves S1 to S4 and the linear solenoid valve SLN. Of these: the solenoid valve Sl is for switching the not-shown 2-3 shift valve; the solenoid valve S2 is for switching the not-shown 1-2 shift valve and 3-4 shift valve; the solenoid valve S3 is for switching the not-shown B-1 timing valve; and solenoid valve S4 is for switching the not-shown engine brake control valve. On the other hand, the linear solenoid valve SLN is for regulating the not-shown pressure control valve.

The CPU 31 decides the running patterns of the vehicle on the basis of the individual detected signals to control the linear solenoid valve SLN on each running pattern.

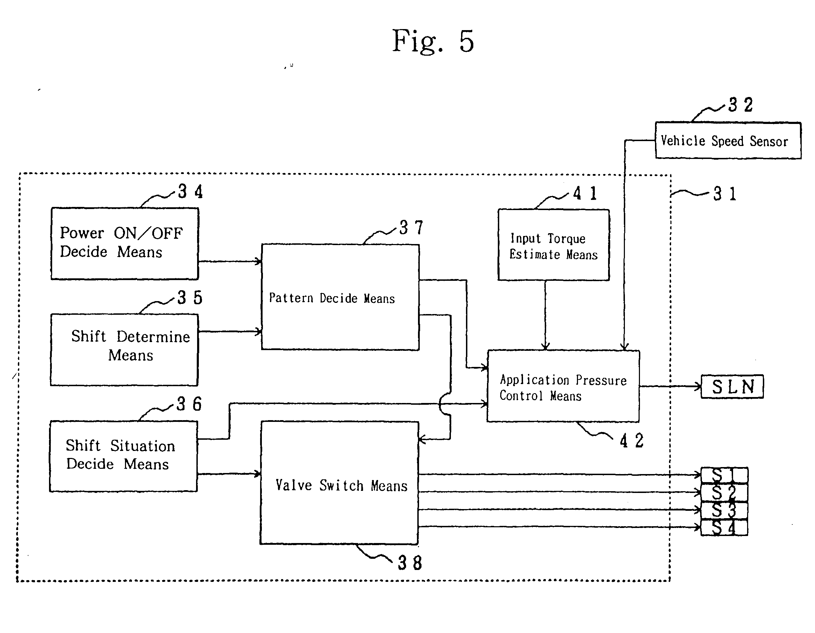

Here will be described the CPU 31. Fig. 5 is a block diagram showing the control system of the automatic transmission according to the embodiment of the present invention.

In Fig. 5: numeral 31 designates the CPU; numeral 32 a vehicle speed sensor for detecting the vehicle speed v; and numeral 34 a power ON/OFF decide means for deciding whether the vehicle is in the power ON state or in the power OFF state. This power ON/OFF decide means 34 judges whether or not the not-shown accelerator pedal is depressed, to decide the power ON state, if the accelerator pedal is depressed, and the power OFF state, if not.

Moreover: numeral 35 designates shift decide means to determine whether the shift is to an upshift or a downshift and, in the case of the upshift, whether or not the shift is to an intermediate gear stage; numeral 36 shift situation decide means for deciding the end of rotational change; numeral 37 pattern decide means for deciding the shift pattern of the vehicle on the basis of the decision result of the power ON/OFF decide means 34 and the decision result of the shift decide means 35; numeral 38 valve switch means for controlling the solenoid valves S1 to S4 on the basis of the decision result of the shift situation decide means 36 and the decision result of the pattern decide means 37; numeral 41 input torque estimate means for estimating the input torque; and numeral 42 application pressure control means for controlling the linear solenoid valve SLN to establish an application pressure on the basis of the decision result of the shift situation decide means 36, the decision result of the pattern decide means 37, and the estimation result of the input torque estimate means 41.

Here will be described the operations of the control system of the automatic transmission thus constructed.

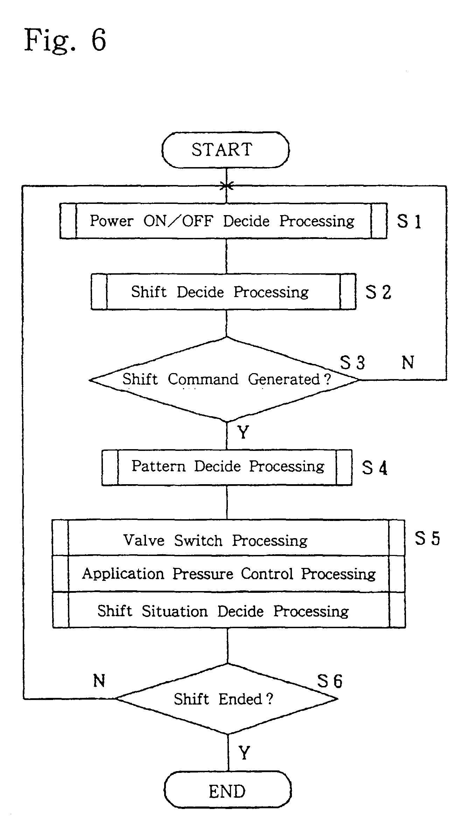

Fig. 6 is a main flow chart illustrating the operations of a quick control of the control system of the automatic transmission according to the embodiment of the present invention.
Step S1: The power ON/OFF decide means (of Fig. 5) decides whether the state is the power ON state or the power OFF state.
Step S2: The shift decide means 35 decides whether the shift is to the upshift or to the downshift and, in the case of the upshift, whether or not the shift is to an intermediate gear stage.
Step S3: It is decided whether or not a shift command has been issued. The routine advances to Step S4, if the shift command has been issued, but returns to Step S1, if not.
Step S4: The pattern decide means 37 decides the shift pattern of the vehicle.
Step S5: The solenoid valves S1 to S4 are controlled by the valve switch means 38, and the linear solenoid valve SLN is controlled by the application pressure control means 42 to establish the application pressure. The shift situation decide means 36 decides the end of rotational change.
Step S6: It is decided whether or not the shift has been ended. The routine ends, if the shift has been ended, and returns to Step S1, if not.

Here will be described a power ON/OFF decide processing subroutine by the power ON/OFF decide means 34 at Step S1 of Fig. 6.

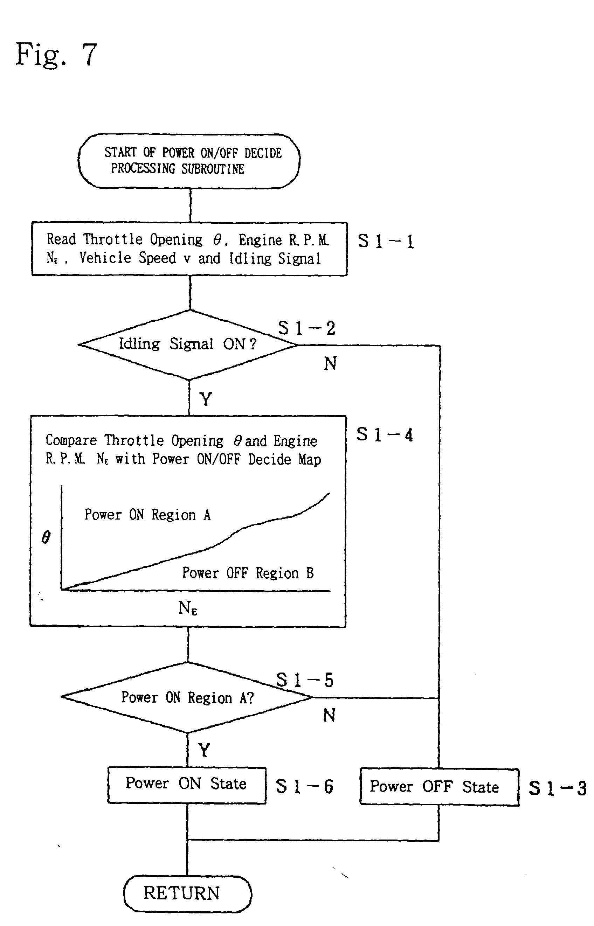

Fig. 7 is a flow chart illustrating the power ON/OFF decide processing subroutine in the embodiment of the present invention.
Step S1-1: The throttle opening θ, the vehicle speed v. the engine R.P.M. N_{E} and an idling signal are read.
Step S1-2: It is decided whether or not the idling signal is ON. If ON, it is apparent that the not-shown accelerator pedal is not depressed, the subroutine advances to Step S1-3. If OFF, the subroutine advances to Step S1-4.
Step S1-3: It is decided that the power is OFF.
Step S1-4: The throttle opening θ and the engine R.P.M. N_{E} are compared with a power ON/OFF map. In this case, the power ON/OFF map has a power ON region A and a power OFF region B, as shown, and the spot plotting the throttle opening θ and the engine R.P.M. N_{E} belongs to either of the regions.
Step S1-5: It is decided whether or not the point spotting the throttle opening θ and the engine R.P.M. N_{E} belongs to the power ON region. The subroutine advances to Step S1-6, if the point belongs to the power ON region A, and to Step S1-3, if to the power OFF region B.
Step S1-6: It is decided that the power is ON.

Subsequently, here will be described the shift decide processing subroutine by the shift decide means 35 at the Step S2 of Fig. 6.

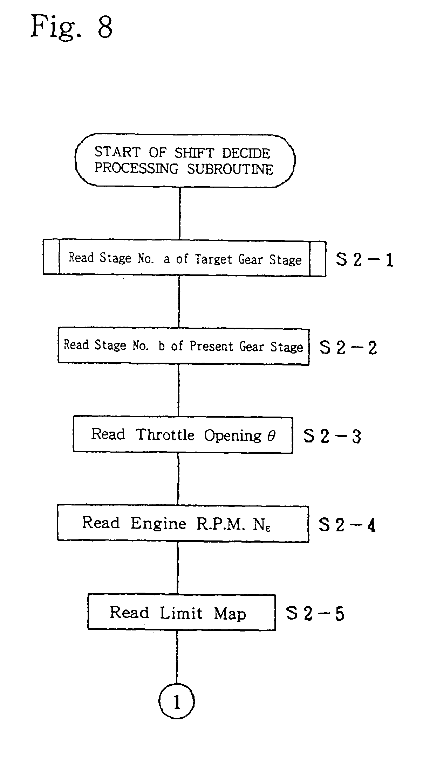

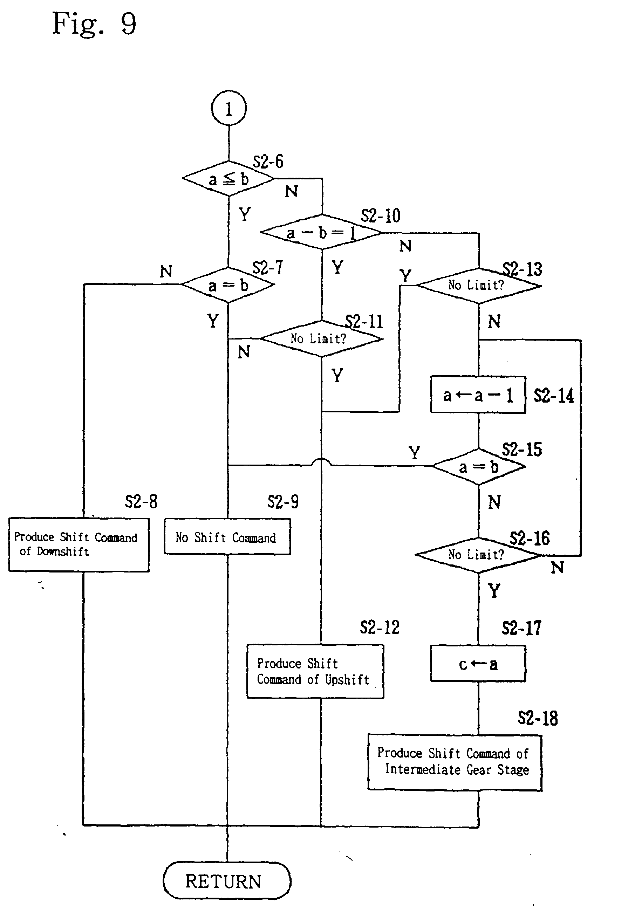

Fig. 8 is a first flow chart illustrating the shift decide processing subroutine in the embodiment of the present invention; Fig. 9 is a second flow chart illustrating the shift decide processing subroutine in the embodiment of the present invention;

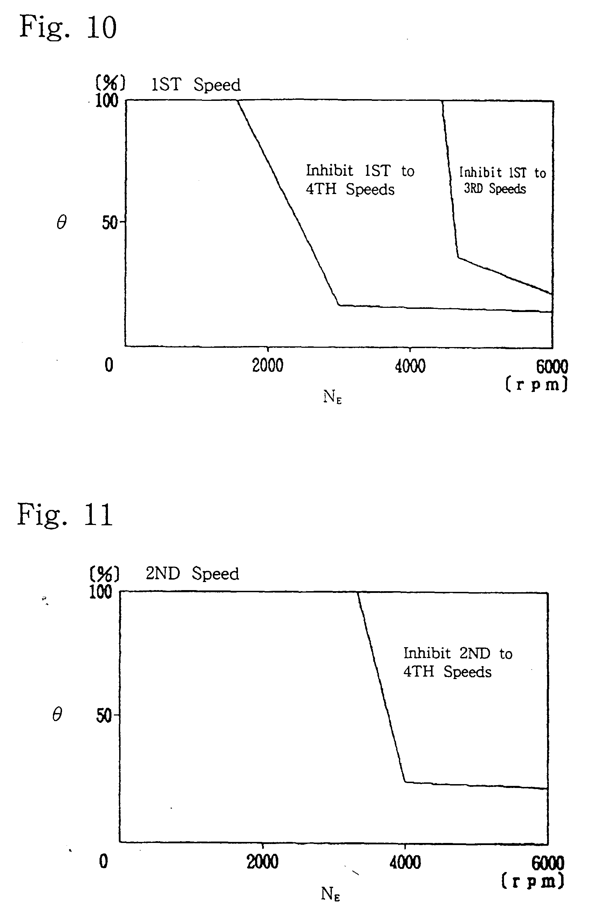

Fig. 10 is a diagram showing a first example of a limit map in the embodiment of the present invention; and
Fig. 11 is a diagram showing a second example of a limit map in the embodiment of the present invention.
Step S2-1: Stage number a (a = 1, 2, 3 and 4) of a target gear stage is read.
Step S2-2: Stage number b (b = 1, 2, 3 and 4) of the present gear stage is read.
Step S2-3: The throttle opening θ is read.
Step S2-4: The engine R.P.M. N_{E} is read.
Step S2-5: There are read the limit maps for limiting the direct shift to the target gear stage, as shown in Figs. 10 and 11. The limit maps are individually provided for the gear stages and set with a variety of shift limit regions in a manner to correspond to the throttle opening θ and the engine R.P.M. N_{E}. Fig. 10 presents the limit map of the case in which the present gear stage is at the 1st speed, and Fig. 11 presents the limit map of the case in which the present gear stage is at the 2nd speed.
Step S2-6: It is decided whether or not the stage number a of the target gear stage is below the stage number b of the present gear stage. The subroutine advances to Step S2-7, if the stage number a is below the stage number b, and to Step S2-10, if the stage number a is over the stage number b.
Step S2-7: It is decided whether or not the stage number a of the target gear stage is equal to the stage number b of the present gear stage. The subroutine advances to Step S2-8, if the stage number a is not equal to the stage number b, and to Step S2-9, if equal.
Step S2-8: A shift command for a downshift is issued.
Step S2-9: No shift command is issued.
Step S2-10: It is decided whether or not the difference of the stage number a of the target gear stage from the stage number b of the present gear stage takes a value of 1. The subroutine advances to Step S2-11, if the difference takes the value 1, and to Step S2-13, if not.
Step S2-11: It is decided whether or not the shift to the target gear stage is limited by the limit map read at Step S2-5. The subroutine advances to Step S2-12, if the shift is not limited, and to Step S2-9, if limited.
Step S2-12: A shift command for an upshift is issued.
Step S2-13: It is decided whether or not a skip shift to a target gear stage is limited by the limit map. The subroutine advances to Step S2-12, if the skip shift is not limited, and to Step S2-14 if limited.
Step S2-14: The value calculated by subtracting 1 from the stage number a of the target gear stage is set to the stage number a of the new target gear stage.
Step S2-15: It is decided whether or not the stage number a of the new target gear stage is equal to the stage number b of the present gear stage. The subroutine advances to Step S2-9, if the stage number a is equal to the stage number b, and to Step S2-16 if not.
Step S2-16: It is decided whether or not a shift to the new target gear stage is limited by the limit map. The subroutine advances to Step S2-17, if the shift is not limited, and to Step S2-14, if limited.
Step S2-17: The stage number a of the new target gear stage is set to the stage number c of an intermediate gear stage.
Step S2-18: A shift command to the intermediate gear stage is issued.

Here will be described the target gear stage read processing subroutine of the Step S2-1 of Fig. 8.

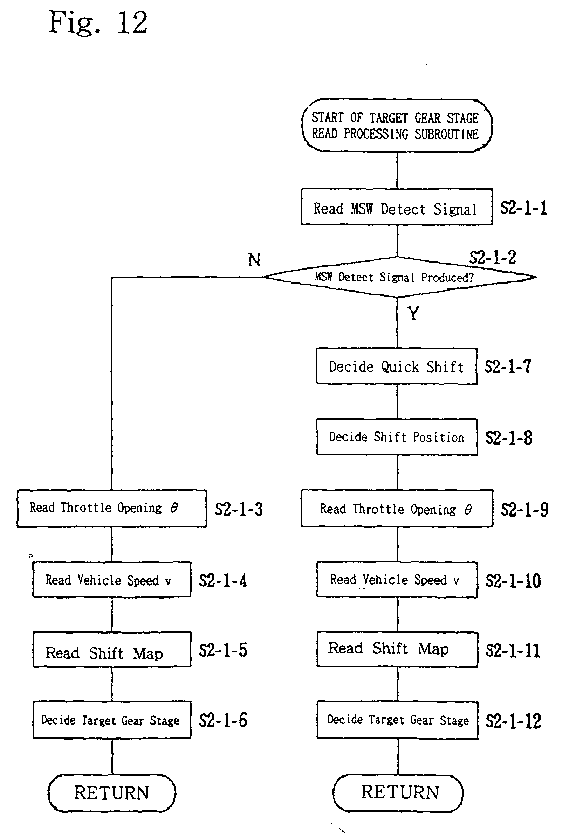

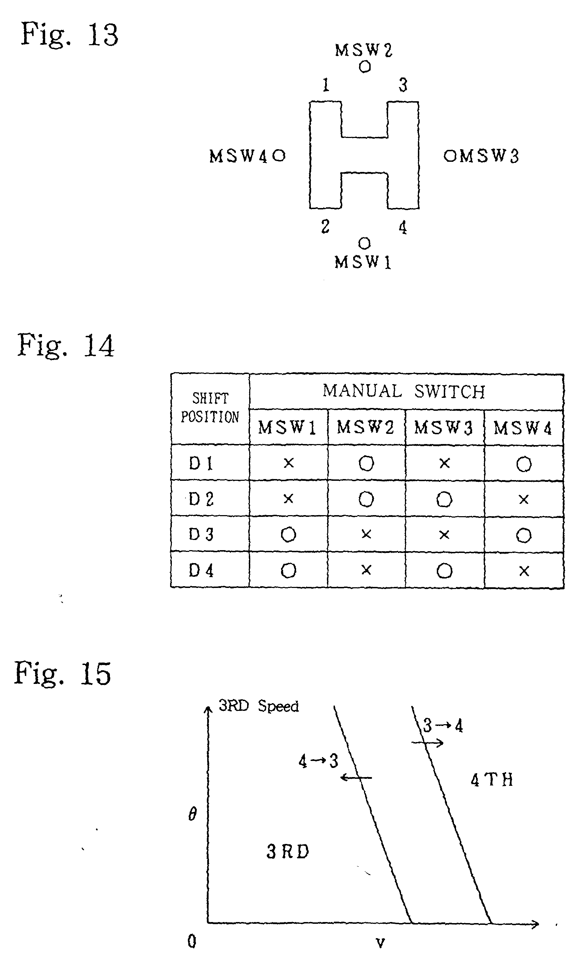

Fig. 12 is a flow chart of the target gear stage read processing subroutine in the embodiment of the present invention; Fig. 13 is a diagram illustrating the manual switch in the embodiment of the present invention; Fig. 14 is a diagram enumerating a shift position deciding table in the embodiment of the present invention; and Fig. 15 is a diagram illustrating a shift map in the embodiment of the present invention.
Step S2-1-1: The detected signals of manual switches MSW1 to MSW4 are read. As shown in Fig. 13: the manual switch MSW1 is turned ON when the not-shown shift lever is moved backwards (or downwards, as shown); the manual switch MSW2 is turned ON when the shift lever is moved forwards (or upwards, as shown); the manual switch MSW3 is turned ON when the shift lever is moved rightwards (as shown); and the manual switch MSW4 is turned ON when the shift lever is moved leftwards (as shown).
   Incidentally, the present embodiment employs the shift lever as the shift operating means, but the shift lever can be replaced by a push button switch.
Step S2-1-2: it is decided whether or not the detected signals of the manual switches MSW1 to MSW4 are issued. This subroutine advances to Step S2-1-7, if the detected signals of the manual switches MSW1 to MSW4 are issued, and to Step S2-1-3, if not.
Step S2-1-3: The throttle opening θ is read for effecting a shift in an automatic transmission mode.
Step S2-1-4: The vehicle speed v is read.
Step S2-1-5: The not-shown shift map for the automatic transmission mode is read.
Step S2-1-6: A target gear stage corresponding to the vehicle speed v and the throttle opening θ is determined on the basis of the shift map for the automatic transmission mode.
Step S2-1-7: A quick shift decision for effecting a shift in the automatic transmission mode is made to issue a quick shift decide signal.
Step S2-1-8: The shift position is decided from the decision table of Fig. 14 on the basis of the detected signals of the manual switches MSW1 to MSW4.
   Incidentally, in Fig. 14: letters D1 to D4 indicate the individual shift positions; symbol ○ indicates that the individual manual switches MSW1 to MSW4 are ON; and symbol X indicates that the individual manual switches MSW1 to MSW4 are OFF.
Step 52-1-9: The throttle opening θ is read.
Step S2-1-10: The vehicle speed v is read.
Step S2-1-11: There are read the shift maps which are prepared to correspond to the individual shift positions D1 to D4. Incidentally, Fig. 15 illustrates the shift map of the shift position D3.
Step S2-1-12: The target gear stage corresponding to the vehicle speed v and the throttle opening θ is decided on the basis of the shift map.

Here will be described the pattern decide processing subroutine of Step S4 of Fig. 6.

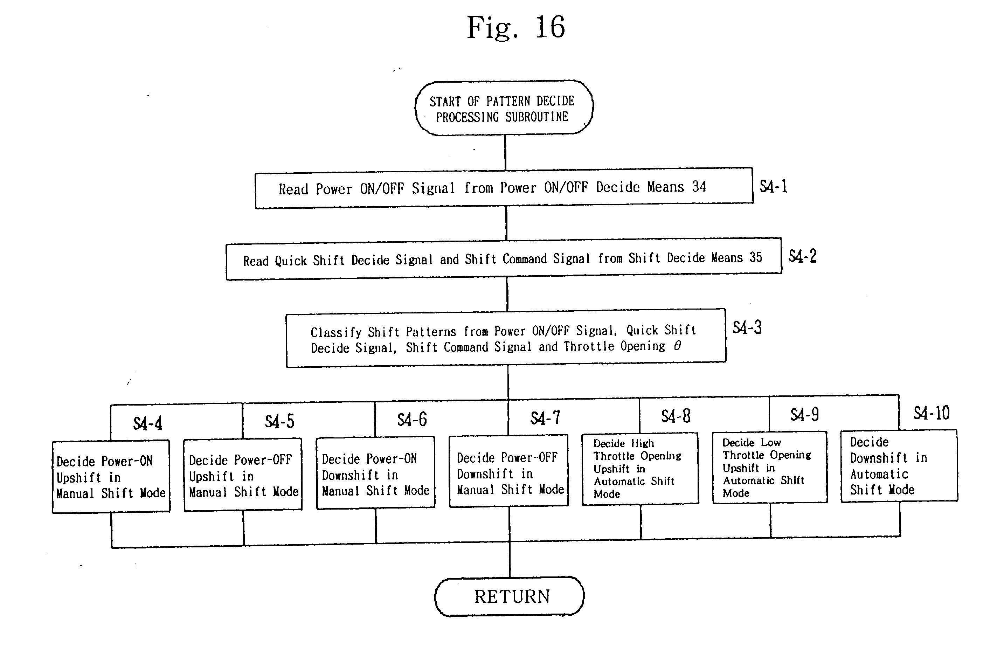

Fig. 16 is a flow chart illustrating the pattern decide processing subroutine in the embodiment of the present invention.
Step S4-1: The power ON/OFF signal is read from the power ON/OFF decide means 34.
Step S4-2: The quick shift decide signal and the shift command signal are read from the shift decide means 35.
Step S4-3: The shift patterns are classified on the basis of the power ON/OFF signal, quick shift decide signal, shift command signal and throttle opening θ .
Step S4-4: It is decided that the shift pattern is the first one of the power-ON upshift in the manual transmission mode.
Step S4-5: It is decided that the shift pattern is the second one of the power-OFF upshift in the manual transmission mode.
Step S4-6: It is decided that the shift pattern is the third one of the power-ON downshift in the manual transmission mode.
Step S4-7: It is decided that the shift pattern is the fourth one of the power-OFF downshift in the manual transmission mode.
Step S4-8: It is decided that the shift pattern is the fifth one of the high throttle opening upshift in the automatic transmission mode.
Step S4-9: It is decided that the shift pattern is the sixth one of the low throttle opening upshift in the automatic transmission mode.
Step S4-10: It is decided that the shift pattern is the seventh one of the downshift in the automatic transmission mode.

Incidentally, if two or more frictional engagement elements are simultaneously applied, as described before, the shifting time period is elongated to deteriorate the shift feeling.

Therefore, the shifting time period is shortened by regulating the line pressure to the control pressure to feed the oil under the control pressure to each of the hydraulic servos on the basis of the shift patterns.

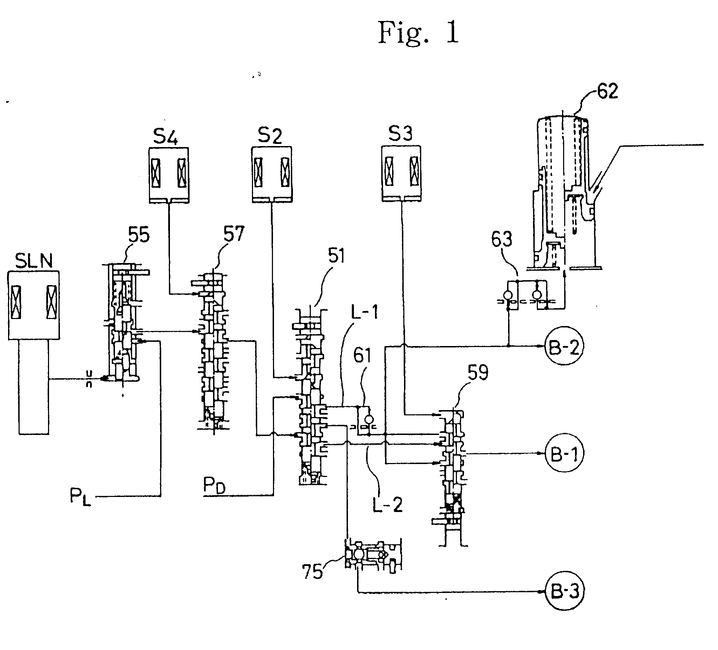

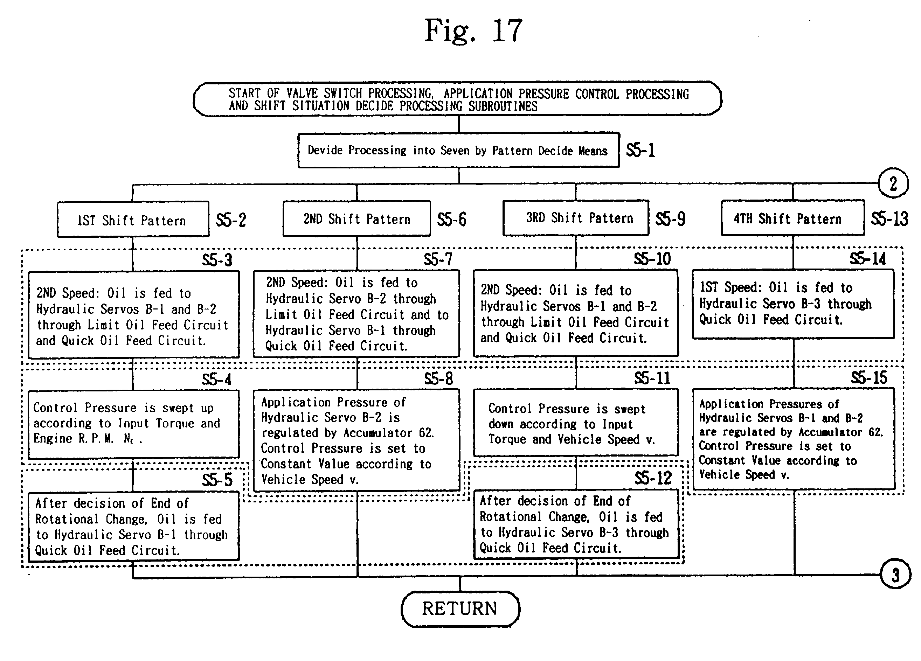

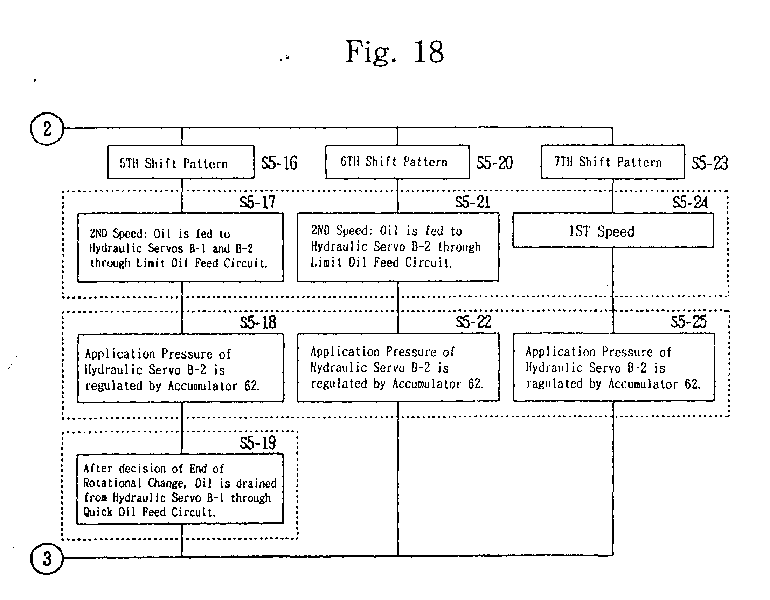

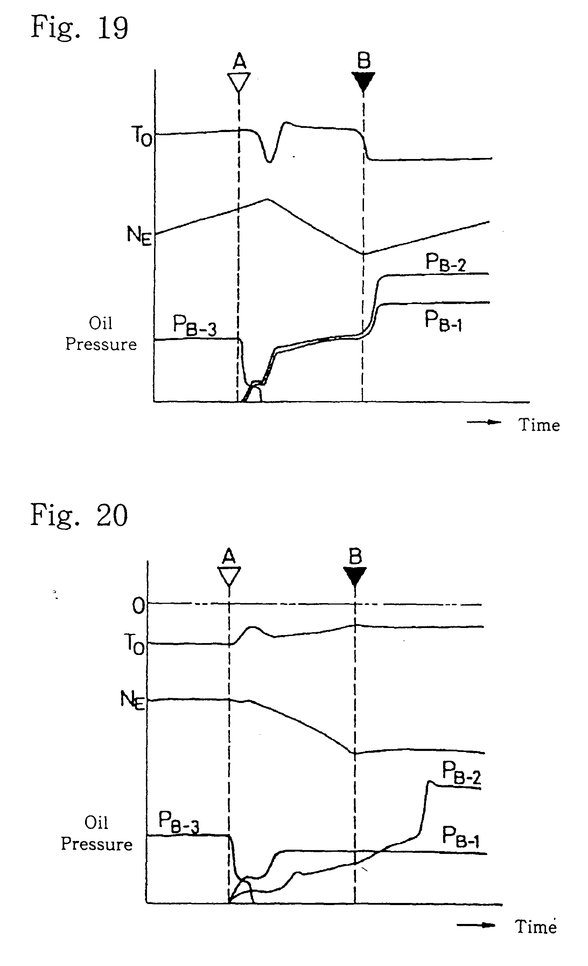

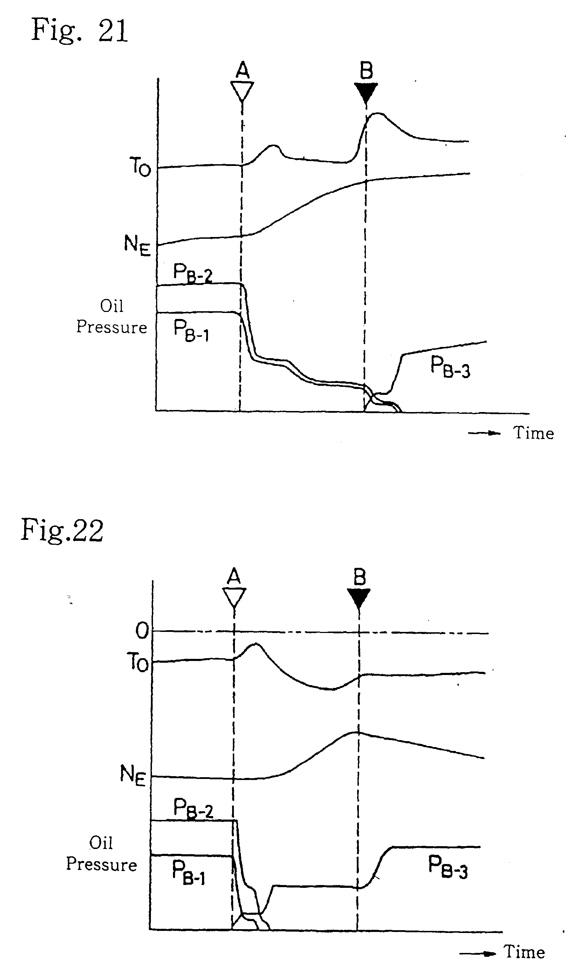

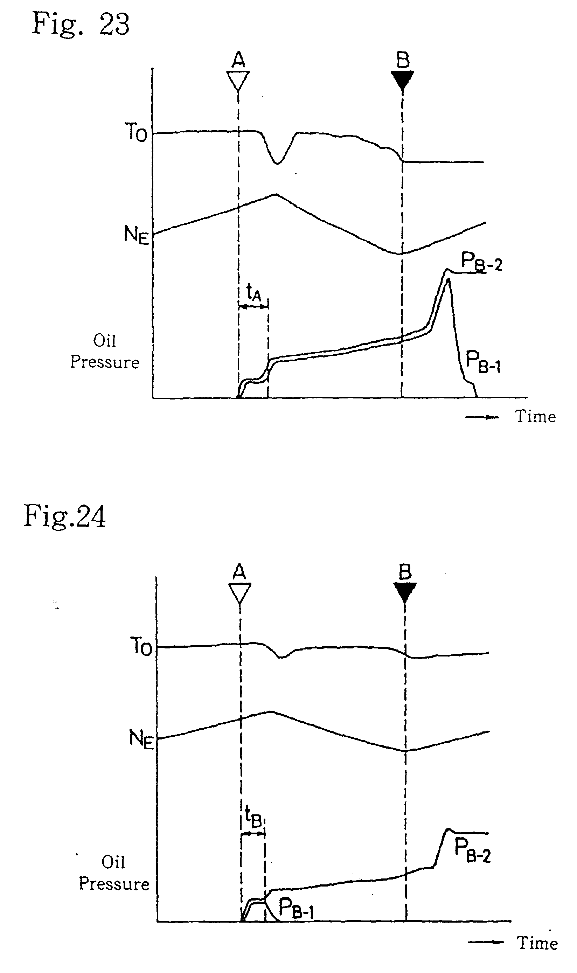

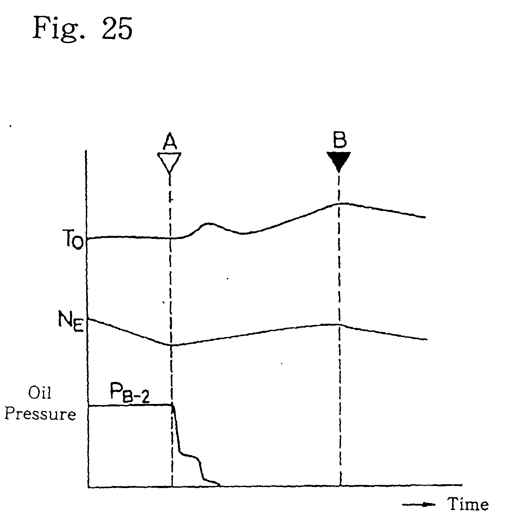

Fig. 1 is a circuit diagram in the embodiment of the present invention; Fig. 17 is a first flow chart illustrating the valve switch processing, application pressure control processing and shift situation decide processing subroutines in the embodiment of the present invention; Fig. 18 is a second flow chart illustrating the valve switch processing, application pressure control processing and shift situation decide processing subroutines in the embodiment of the present invention; Fig. 19 is a time chart illustrating a first shift pattern in the embodiment of the present invention; Fig. 20 is a time chart illustrating a second shift pattern in the embodiment of the present invention; Fig. 21 is a time chart illustrating a third shift pattern in the embodiment of the present invention; Fig. 22 is a time chart illustrating a fourth shift pattern in the embodiment of the present invention; Fig. 23 is a time chart illustrating a fifth shift pattern in the embodiment of the present invention; Fig. 24 is a time chart illustrating a sixth shift pattern in the embodiment of the present invention; and Fig. 25 is a time chart illustrating a seventh shift pattern in the embodiment of the present invention. In Figs. 19 to 25: letter A designates an instant for the shift decision; letter B an instant for deciding the end of rotation; letter To an output shaft torque; letter N_{E} the engine R.P.M.; letters P_{B-1} the application pressure of a hydraulic servo B-1: letters P_{B-2} the application pressure of a hydraulic servo B-2; and letters P_{B-3} the application pressure of a hydraulic servo B-3.

In Fig. 1: letters P_{L} designate the line pressure; letters P_{D} a D-range pressure; numeral 51 a 1-2 shift valve for effecting the 1-2 shift; numeral 55 a pressure control valve; numeral 57 an engine brake control valve; and numeral 59 a B-1 timing valve.

Moreover: characters B-1 designate a hydraulic servo for the first brake B1 (of Fig. 2) to be used for the engine brake at the 2nd speed; characters B-2 a hydraulic servo for the second brake B2 to be used for the D-range; and characters B-3 a hydraulic servo for the third brake B3 to be used at the 1st speed.

The hydraulic servo B-2 is fed with the oil through an orifice valve acting as the oil limit means so that its application pressure is adjusted by an accumulator 62 connected through an orifice valve 63. Incidentally, numeral 75 designates a check valve connected to the hydraulic servo B-3.

Moreover, letter S2 designates the solenoid valve for switching the 1-2 shift valve 51; letters S3 the solenoid valve for switching the B-1 timing valve 59; letters S4 the solenoid valve for switching the engine brake control valve 57; and letters SLN the linear solenoid valve for actuating the pressure control valve 55 to regulate the line pressure to the necessary control pressure.

In case of the 1→ 2 shift in the first shift pattern (i.e., the power-ON upshift in the manual transmission mode) is to be effected in the hydraulic circuit having the construction described above, the solenoid of the solenoid valve S2 is turned ON whereas the individual solenoids of the solenoid valves S3 and S4 are turned OFF. At this time, the 1-2 shift valve 51 and the B-1 timing valve 59 take the lefthand half positions (as will be called the "left-half position") of the drawing whereas the engine brake control valve 57 takes the righthand half position (as will be called the "right-half position") of the drawing.

As a result, the oil under the D-range pressure P_{D} is fed through the 1-2 shift valve 51 to the orifice valve 61, by which it is regulated and fed to the hydraulic servo B-2 and further through the B-1 timing valve 59 to the hydraulic servo B-1.

On the other hand, the oil under the control pressure is fed through the engine brake control valve 57, the 1-2 shift valve 51 and the B-1 timing valve 59 to the hydraulic servo B-2 and further through the B-1 timing valve 59 to the hydraulic servo B-1. In this case, the control pressure is swept up according to the input torque and the engine R.P.M. N_{E}.

Thus, the oil is quickly fed to the hydraulic servos B-1 and B-2 by way of the limit oil feed circuit, which is formed through the orifice valve 61 and via the oil passage L-1, and the quick oil feed circuit, which is formed not through the orifice valve 61 but via the oil passage L-2, so that the hydraulic servos B-1 and B-2 can be simultaneously applied. As a result, the time period for the hydraulic servos B-1 and B-2 to be filled up with the oil is shortened to shorten not only the time period from the shift decision to the start of application of the first and second brakes B1 and B2 but also the time period from the start of the application of the first and second brakes B1 and B2 to the end of the application. As a result, the shifting time can be shortened to improve the shift feeling.

And, when the shift situation decide means (of Fig. 5) decides the end of rotational change, the solenoid of the solenoid valve S2 is turned ON so that the B-1 timing valve 59 takes the right-half position. Then, the oil under the D-range pressure P_{D} is fed through the 1-2 shift valve 51 to the orifice valve 61, by which it is regulated and fed to the hydraulic servo B-2. In this case, the application pressure of the hydraulic servo B-2 is adjusted by the accumulator 62 which is fed with the oil through the orifice valve 63. On the other hand, the oil under the control pressure is fed through the engine brake control valve 57, the 1-2 shift valve 51 and the B-1 timing valve 59 to the hydraulic servo B-1.

In the case of the 1→ 2 shift in the second shift pattern (i.e., the power-OFF upshift in the manual transmission mode), on the other hand, the individual solenoids of the solenoid valves S2 and S3 are turned ON whereas the solenoid of the solenoid valve S4 is turned OFF. At this time, the 1-2 shift valve 51 takes the left-half position whereas the engine brake control valve 57 and the B-1 timing valve 59 take the right-half positions.

As a result, the oil under the D-range pressure P_{D} is fed through the 1-2 shift valve 51 to the orifice valve 61, by which it is regulated and fed to the hydraulic servo B-2. In this case, the application pressure of the hydraulic servo B-2 is adjusted by the accumulator 62 which is fed with the oil through the orifice valve 63.

On the other hand, the oil under the control pressure is fed through the engine brake control valve 57, the 1-2 shift valve 51 and the B-1 timing valve 59 to the hydraulic servo B-1. In this case, the control pressure is set to a constant value according to the vehicle speed v.

Next, in the case of the 2→ 1 shift in the third shift pattern (i.e., the power-ON downshift in the manual transmission mode), the solenoid of the solenoid valve S2 is turned ON whereas the individual solenoids of the solenoid valves S3 and S4 are turned OFF. At this time, the 1-2 shift valve 51 and the B-1 timing valve 59 take the left-half positions whereas the engine brake control valve 57 takes the right-half position.

As a result, the oil under the D-range pressure P_{D} is fed through the 1-2 shift valve 51 to the orifice valve 61, by which it is regulated and fed to the hydraulic servo B-2 and further through the B-1 timing valve 59 to the hydraulic servo B-1.

On the other hand, the oil fed to the hydraulic servo B-2 is further fed through the B-1 timing valve 59, the 1-2 shift valve 51 and the engine brake control valve 57 to the pressure control valve 55. Likewise, the oil fed to the hydraulic servo B-1 is also fed to the pressure control valve 55. In this case, the control pressure is swept down according to the input torque and the vehicle speed v.

And, when the shift situation decide means 36 decides the end of rotational change, the solenoid of the solenoid valve S2 is turned OFF so that the 1-2 shift valve 51 takes the left-half position. Then, the oil in the hydraulic servos B-1 and B-2 is drained. Moreover, the oil under the control pressure is fed through the engine brake control valve 57, the 1-2 shift valve 51 and the check valve 75 to the hydraulic servo B-3.

Thus, the oil is quickly fed to the hydraulic servo B-3 by way of the quick oil feed circuit which is formed not through the orifice valve but via the oil passage L-2. As a result, the time period for the hydraulic servo B-3 to be filled up with the oil is shortened to shorten not only the time period from the shift decision to the start of application of the third brake B3 but also the time period from the start of the application of the third brake B3 to the end of the application. As a result, the shifting time can be shortened to improve the shift feeling.

Next, in the case of the 2→ 1 shift in the fourth shift pattern (i.e., the power-OFF downshift in the manual transmission mode), the solenoid of the solenoid valve S3 is turned ON whereas the individual solenoids of the solenoid valves S2 and S4 are turned OFF. At this time, the engine brake control valve 57 and the B-1 timing valve 59 take the left-half positions whereas the 1-2 shift valve 51 takes the right-half position.

As a result, the oil in the hydraulic servos B-1 and B-2 is drained. In this case, the application pressure of the hydraulic servos B-1 and B-2 is adjusted by the accumulator 62 which has its oil drained through the orifice valve 63.

On the other hand, the oil under the control pressure is fed through the engine brake control valve 57, the 1-2 shift valve 51 and the check valve 75 to the hydraulic servo B-3. In this case, the control pressure is set to a constant value according to the vehicle speed v.

Next, in the 1→ 2 shift in the fifth shift pattern (i.e., the high throttle opening upshift in the automatic transmission mode), the individual solenoid of the solenoid valves S2 and S4 are turned ON whereas the solenoid of the solenoid valve S3 is turned OFF. At this time, the 1-2 shift valve 51, the engine brake control valve 57 and the B-1 timing valve 59 take the left-half positions.

As a result, the oil under the D-range pressure P- is fed through the 1-2 shift valve 51 to the orifice valve 61, by which it is regulated and fed to the hydraulic servo B-2 and further through the B-1 timing valve 59 to the hydraulic servo B-1. In this case, the application pressure of the hydraulic servo B-2 is adjusted by the accumulator 62 which is fed with the oil through the orifice valve 63. Moreover, the oil under the control pressure is not fed.

Incidentally, only for a time period t_{A} of Fig. 23, as in the first shift pattern, the oil can also be fed to the hydraulic servos B-1 and B-2 by way of the limit oil feed circuit, which is formed through the orifice valve 61 and via the oil passage L-1, and the quick oil feed circuit which is formed not through the orifice valve 61 but via the oil passage L-2. Thus, only for the time period t_{A}, the oil is quickly fed by way of the quick oil feed circuit to the hydraulic servos B-1 and B-2 to shorten the time period from the shift decision to the start of the application of the third brake B3, thereby to eliminate the time lag. After this, the oil is fed by way of the limit oil feed circuit to the hydraulic servos B-1 and B-2 to smoothen the shift.

When the shift situation decide means 36 decides the end of rotational change, the solenoid of the solenoid valve S3 is turned ON so that the B-1 timing valve 59 takes the right-half position. Thus, the oil under the D-range pressure P_{D} is fed through the 1-2 shift valve 51 to the orifice valve 61, by which it is regulated and fed to the hydraulic servo B-2. In this case, the application pressure of the hydraulic servo B-2 is adjusted by the accumulator 62 which is fed with the oil through the orifice valve 63. In this meanwhile, the oil of the hydraulic servo B-1 is drained.

Incidentally, when the shift situation decide means 36 decides the end of rotational change, the solenoid of the solenoid valve S3 can be turned ON to bring the B-1 timing valve 59 into the right-half position, and the solenoid of the solenoid valve S1 can be turned OFF to bring the pressure control valve 55 into the right-half position. In this case, the oil under the control pressure can be quickly drained from the hydraulic servo B-1.

Next, in the 1→ 2 shift in the sixth shift pattern (i.e., the low throttle opening upshift in the automatic transmission mode), the individual solenoids of the solenoid valves S2, S3 and S4 are turned ON. At this time, the 1-2 shift valve 51 and the engine brake control valve 57 take the left-half positions whereas the B-1 timing valve 59 takes the right-half position.

As a result, the oil under the D-range pressure P_{D} is fed through the 1-2 shift valve 51 to the orifice valve 61, by which it is regulated and fed to the hydraulic servo B-2. In this case, the application pressure of the hydraulic servo B-2 is adjusted by the accumulator 62 which is fed with the oil through the orifice valve 63. Moreover, the oil under the control pressure is not fed.

Incidentally, only for a time period t_{B} of Fig. 24, as in the first shift pattern, the oil can also be quickly fed to the hydraulic servos B-1 and B-2 by way of the limit oil feed circuit, which is formed through the orifice valve 61 and via the oil passage L-1, and the quick oil feed circuit which is formed not through the orifice valve 61 but via the oil passage L-2.

Next, in the 2→ 1 shift in the seventh shift pattern (i.e., the downshift in the automatic transmission mode), the solenoid of the solenoid valve S4 is turned ON whereas the individual solenoids of the solenoid valves S2 and S3 are turned OFF. At this time, the engine brake control valve 57 and the B-1 timing valve 59 take the left-half positions whereas the 1-2 shift valve 51 takes the right-half position.

As a result, the oil of the hydraulic servo B-2 is drained. In this case, the application pressure of the hydraulic servo B-2 is adjusted by the accumulator 62 which has its oil drained through the orifice valve 63.
Step S5-1: According to the decision result of the pattern decide means 37, the processing is divided into the following seven operations. The subroutine advances to Step S5-2, if it is decided at Step S4-3 of Fig. 16 that the shift pattern of the vehicle is in the first shift pattern; to Step S5-6, if the vehicular shift pattern is decided to be in the second shift pattern; to Step S5-9, if the vehicular shift pattern is decided to be in the third shift pattern; to Step S5-13, if the vehicular shift pattern is decided to be in the fourth shift pattern; to Step S5-16, if the vehicular shift pattern is decided to be in the fifth shift pattern; to Step S5-20, if the vehicular shift pattern is decided to be in the sixth shift pattern; and to Step S5-23, if the vehicular shift pattern is decided to be in the seventh shift pattern.
Step S5-2: The first shift pattern is established.
Step S5-3: The 1-2 shift valve 51 is brought into the 2nd speed state. The oil is quickly fed to the hydraulic servos B-1 and B-2 by way of the limit oil feed circuit and the quick oil feed circuit.
Step S5-4: The control pressure is swept up according to the input torque and the engine R.P.M. N_{E}.
Step S5-5: When the end of rotational change is decided, the oil under the control pressure is fed to the hydraulic servo B-1 by way of the quick oil feed circuit.
Step S5-6: The second shift pattern is established.
Step S5-7: The 1-2 shift valve 51 is brought into the 2nd speed state. The oil under the D-range pressure P_{D} is fed to the hydraulic servo B-2 by way of the limit oil feed circuit, and the oil under the control pressure is fed to the hydraulic servo B-1 by way of the quick oil feed circuit.
Step S5-8: The application pressure of the hydraulic servo B-2 is adjusted by the accumulator 62. The control pressure is set to a constant value according to the vehicle speed v.
Step S5-9: The third shift pattern is established.
Step S5-10: The 1-2 shift valve 51 is brought into the 2nd speed state. The hydraulic servos B-1 and B-2 are fed with the oil under the D-range pressure P_{D} by way of the limit oil feed circuit and the oil under the control pressure by way of the quick oil feed circuit.
Step S5-11: The control pressure is swept down according to the input torque and the vehicle speed v.
Step S5-12: When the end of rotational change is decided, the oil under the control pressure is fed to the hydraulic servo B-3 by way of the quick oil feed circuit.
Step S5-13: The fourth shift pattern is established.
Step S5-14: The 1-2 shift valve 51 is brought into the 1st speed state. The oil under the control pressure is fed to the hydraulic servo B-3 by way of the quick oil feed circuit.
Step S5-15: The application pressures of the hydraulic servos B-1 and B-2 are adjusted by the accumulator 62. The control pressure is set to a constant value according to the vehicle speed v.
Step S5-16: The fifth shift pattern is established.
Step S5-17: The 1-2 shift valve 51 is brought into the 2nd speed state. The oil under the D-range pressure P_{D} is fed to the hydraulic servos B-1 and B-2 by way of the limit oil feed circuit.
Step S5-18: The application pressure of the hydraulic servo B-2 is adjusted by the accumulator 62.
Step S5-19: When the end of rotational change is decided, the oil under the control pressure is drained from the hydraulic servo B-1 by way of the quick oil feed circuit.
Step S5-20: The sixth shift pattern is established.
Step S5-21: The 1-2 shift valve 51 is set into to the 2nd speed state. The oil under the D-range pressure P_{D} is fed to the hydraulic servo B-2 by way of the limit oil feed circuit.
Step S5-22; The application pressure of the hydraulic servo B-2 is adjusted by the accumulator 62.
Step S5-23: The seventh shift pattern is established.
Step S5-24: The 1-2 shift valve 51 is brought into the 1st speed state.
Step S5-25: The application pressure of the hydraulic servo B-2 is adjusted by the accumulator 62.

## Claims

1. An automatic transmission having: a first hydraulic servo (B1) adapted to be fed with oil for effecting a shift to a target gear stage; a second hydraulic servo (B2) adapted to be fed with the oil additionally for effecting a shift to the target gear stage depending on an engine load value ; and a control system; wherein the control system is characterized by
a limit oil feed circuit supplying oil through oil limit means (61); a quick oil feed circuit supplying oil not through the oil limit means (61); and oil passage swith means (S2,S3,S4,51,57,59) for switching and connecting the limit oil feed circuit and the quick oil feed circuit to the first hydraulic servo (B1) and the second hydraulic servo (B2), wherein the oil passage switch means (S2,S3,S4,51,57,59) is arranged to feed the oil of the quick oil feed circuit to the first hydraulic servo (B1) and the second hydraulic servo (B2), when the engine load is high, and the oil of the limit oil feed circuit to at least the first hydraulic servo (B1) when the engine load is low.

2. An automatic transmission, according to claim 1, comprising:
a vehicle speed sensor (32) for detecting a vehicle speed;
a throttle opening sensor for detecting a throttle opening;
electronic control means (31) for outputting a shift signal on the basis of the detected signals coming from said two sensors; and
a hydraulic circuit for actuating said oil passage switch means (S2,S3,S4,51,57,59) in response to the shift signal of said electronic control means (31) to feed an oil pressure selectively to said hydraulic servos (B1,B2).
wherein said hydraulic circuit includes: said limit oil feed circuit for supplying the oil pressure through oil limit means (61); said quick oil feed circuit for supplying the oil pressure not through said oil limit means (61); an oil passage switch valve adapted to be switched for connecting said limit oil feed circuit and said quick oil feed circuit selectively to said first hydraulic servo (B1) and said second hydraulic servo (B2); and a first solenoid valve (S1) for switching said oil passage switch valve in response to the signal of said electronic control means (31), and
wherein said electronic control means (31) includes: power ON/OFF decide means (34) for deciding the magnitude of an engine load on the basis of the detected signal of said throttle opening sensor; and valve switch means (38) for feeding such a signal to said first solenoid valve (S1) as to switch said oil passage switch valve such that the oil pressure of said quick oil feed circuit is fed to said first hydraulic servo (B1) and said second hydraulic servo (B2), when it is decided by said power ON /OFF decide means (34) that the engine load is high, whereas the oil pressure of said limit oil feed circuit is fed to at least said first hydraulic servo (B1) when it is decided that the engine load is low.

3. An automatic transmission according to Claim 2,
wherein said hydraulic circuit further includes pressure regulate means (SLN, 55) for regulating a line pressure (PL) to a control pressure, and
wherein said pressure regulate means (SLN, 55) feeds the oil under said control pressure to said quick oil feed circuit to adjust the shift transition characteristics of said first hydraulic servo (B1) and said second hydraulic servo (B2) which are fed with the oil pressure of said quick oil feed circuit.

4. An automatic transmission according to Claim 3, further comprising shift means for selecting an automatic transmission and a manual transmission arbitrarily,
wherein said valve switch means (38) outputs such a signal to said first solenoid valve (S1) as to switch said oil pressure switch valve such that the oil pressure of said quick oil feed circuit is fed to said first hydraulic servo (B1) and said second hydraulic servo (B2), when it is decided by said power ON/OFF decide means (34) in the manual transmission selected by said shift means that the engine load is high, whereas the oil pressure of said limit oil feed circuit is fed to at least said first hydraulic servo (B1) when it is decided that the engine load is low.

5. A control system for an automatic transmission according to Claim 4, further comprising shift detect means for detecting that said shift means is operated,
wherein said electronic control means (31) includes: shift decide means (36) for deciding the kind of the shift on the basis of the detected signal of said shift detect means; and pattern decide means (37) for deciding a shift pattern to said target gear stage on the basis of a plurality of shift patterns which are prepared by combining the decision result of said power ON/OFF decide means (34) and the decision result of said shift decide means (36), and
wherein said valve switch means (38) outputs a signal for switching said oil passage switch means (S2,S3,S4,51,57,59) according to each of the shift patterns decided by said pattern decide means (37).

## Patentansprüche

1. Automatisches Getriebe mit: einem ersten Hydraulikservo (B1), der eingerichtet ist, mit Öl gespeist zu werden, um einen Gangwechsel auf eine Sollgetriebestufe auszuführen; einem zweiten Hydraulikservo (B2), der eingerichtet ist, mit dem Öl gespeist zu werden, um zusätzlich, abhängig von einem Motorlastwert, einen Gangwechsel auf die Sollgetriebestufe auszuführen; und einem Steuerungssystem, wobei das Steuerungssystem gekennzeichnet ist, durch
einen Ölbegrenzungsspeisekreis, der Öl durch eine Ölbegrenzungseinrichtung (61) zuführt, einen schnellen Ölspeisekreis, der Öl nicht durch den Ölbegrenzungsspeisekreis (61) zuführt; und eine Öldurchgangschalteinrichtung (S2,S3,S4,51,57,59) zum Schalten und Verbinden des Ölbegrenzungsspeisekreises und des schnellen Ölspeisekreises mit dem ersten Hydraulikservo (B1) und dem zweiten Hydraulikservo (B2), wobei die Öldurchgangschalteinrichtung (S2,S3,S4,51,57,59) angeordnet ist, um das Öl des schnellen Ölspeisekreises in den ersten Hydraulikservo (B1) und den zweiten Hydraulikservo (B2) einzuspeisen, wenn die Motorlast hoch ist, und um das Öl des Ölbegrenzungsspeisekreises zumindest in den ersten Hydraulikservo (B1) einzuspeisen, wenn die Motorlast niedrig ist.

2. Automatisches Getriebe nach Anspruch 1, mit:
einem Fahrzeuggeschwindigkeitssensor (32) zum Messen einer Fahrzeuggeschwindigkeit;
einem Drosselklappenöffnungssensor zum Messen einer Drosselklappenöffnung;
einer elektronischen Steuerungseinrichtung (31) zur Ausgabe eines Schaltsignals auf der Basis der von den zwei Sensoren kommenden Meßsignale; und
einem Hydraulikkreis zur Betätigung der Öldurchgangschalteinrichtung (S2,S3,S4,51,57,59) als Antwort auf das Schaltsignal der elektronischen Steuerungseinrichtung (31), um einen Öldruck selektiv in die Hydraulikservos (B1,B2) einzuspeisen;
wobei der Hydraulikkreis aufweist:
den Ölbegrenzungsspeisekreis zum Zuführen des Öldrucks durch die Ölbegrenzungseinrichtung (61); den schnellen Ölspeisekreis zum Zuführen des Öldrucks nicht durch die Ölbegrenzungseinrichtung (61); ein Öldurchgangschaltventil, das geschaltet werden kann, um den Ölbegrenzungsspeisekreis und den schnellen Ölspeisekreis selektiv mit dem ersten Hydraulikservo (B1) und dem zweiten Hydraulikservo (B2) zu verbinden; und ein erstes Solenoidventil (S1) zum Schalten des Öldurchgangschaltventils als Antwort auf das Signal der elektronischen Steuerungseinrichtung (31), und
wobei die Steuerungseinrichtung (31) aufweist:
eine Kraft-AN/AUS-Entscheidungseinrichtung (34) zum Entscheiden über die Höhe einer Motorlast auf der Basis des Meßsignals des Drosselklappenöffnungssensors; und eine Ventilschalteinrichtung (38) zum Einspeisen eines solchen Signals in das erste Solenoidventil (S1), um das Öldurchgangschaltventil so zu schalten, daß der Öldruck des schnellen Ölspeisekreises in den ersten Hydraulikservo (B1) und den zweiten Hydraulikservo (B2) eingespeist wird, wenn von der Kraft- AN/AUS-Entscheidungseinrichtung (34) entschieden wird, daß die Motorlast hoch ist, während der Öldruck des Ölbegrenzungsspeisekreises zumindest in den ersten Hydraulikservo (B1) eingespeist wird, wenn entschieden wird, daß die Motorlast niedrig ist.

3. Automatisches Getriebe nach Anspruch 2, wobei der Hydraulikkreis ferner aufweist:
eine Druckregelungseinrichtung (SLN,55) zum Regeln eines Leitungsdrucks (P_{L}) auf einen Steuerungsdruck, und
wobei die Druckregelungseinrichtung (SLN,55) das Öl unter dem Steuerungsdruck in den schnellen Ölspeisekreis einspeist, um die Schaltübergangseigenschaften des ersten Hydraulikservos (B1) und des zweiten Hydraulikservos (B2) anzupassen, welche mit dem Öldruck des schnellen Ölspeisekreises gespeist werden.

4. Automatisches Getriebe nach Anspruch 3, ferner mit
einer Schalteinrichtung, um willkürlich ein automatisches Getriebe und ein Handgetriebe zu wählen,
wobei die Ventilschalteinrichtung (38) ein solches Signal an das erste Solenoidventil (S1) ausgibt, um das Öldruckschaltventil so zu schalten, daß der Öldruck des schnellen Ölspeisekreises in den ersten Hydraulikservo (B1) und den zweiten Hydraulikservo (B2) eingespeist wird, wenn in dem von der Schalteinrichtung gewählten Handgetriebe von der Kraft- AN/AUS-Entscheidungseinrichtung (34) entschieden wird, daß die Motorlast hoch ist, während der Öldruck des Ölbegrenzungsspeisekreises zumindest in den ersten Hydraulikservo (B1) eingespeist wird, wenn entschieden wird, daß die Motorlast niedrig ist.

5. Steuerungssystem für ein automatisches Getriebe nach Anspruch 4, ferner mit einer Schaltdetektionseinrichtung zum Detektieren, daß die Schalteinrichtung betätigt ist,
wobei die elektronische Steuerungseinrichtung (31) aufweist:
eine Schaltentscheidungseinrichtung (36) zum Entscheiden über die Art des Gangwechsels auf der Basis des Meßsignals der Schaltdetektionseinrichtung; und eine Schemaentscheidungseinrichtung (37) zum Entscheiden über ein Schaltschema zu der Sollgetriebestufe auf der Basis mehrerer Schaltschemata, welche durch Kombinieren des Entscheidungsergebnisses der Kraft- AN/AUS-Entscheidungseinrichtung (34) und des Entscheidungsergebnisses der Schaltentscheidungseinrichtung (36) eingerichtet sind, und
wobei die Ventilschalteinrichtung (38) ein Signal zum Schalten der Öldurchgangschalteinrichtung (S2,S3,S4,51,57,59) entsprechend dem jeweiligen Schaltschema ausgibt, das von der Schemaentscheidungseinrichtung (37) entschieden wurde.

## Revendications

1. Une transmission automatique comportant :
un premier asservissement hydraulique (B1) adapté pour être alimenté en huile afin d'effectuer un changement de vitesse, vers un rapport cible;
un deuxième asservissement hydraulique (B2) adapté pour être alimenté en huile additionnellement afin d'effectuer un changement de vitesse vers le rapport cible, selon la charge motrice; et un système de commande, dans lequel le système de commande est caractérisé par un circuit d'alimentation en huile à limitation fournissant de l'huile par un moyen limiteur d'huile (61);
un circuit d'alimentation rapide en huile fournissant de l'huile sans passer par les moyens de limitation d'huile (61); et un moyen d'interrupteur de passage d'huile (**S2, S3, S4, 51, 57, 59**) destiné à assurer la commutation et la connexion du circuit d'alimentation en huile à limitation et du circuit d'alimentation rapide en huile au premier asservissement hydraulique (B1) et au deuxième asservissement hydraulique (B2) dans lequel le moyen de commutation de passage d'huile (S2, S3, S4, 51, 57, 59) est agencé pour alimenter avec l'huile du circuit d'alimentation rapide en huile le premier asservissement hydraulique (B1) et le deuxième asservissement hydraulique (B2) lorsque la charge motrice est haute et avec l'huile du circuit d'alimentation en huile à limitation au moins le premier asservissement hydraulique (B1) lorsque la charge motrice est faible.

2. Une transmission automatique selon la revendication 1, comprenant :
un capteur de vitesse de véhicule (32) destiné à appréhender la vitesse du véhicule;
un capteur d'ouverture d'étranglement destiné à appréhender l'ouverture d'étranglement;
un moyen de commande électronique (31) destiné à envoyer un signal de changement sur la base des signaux appréhendés venant desdits capteurs; et
un circuit hydraulique destiné à actionner lesdits moyens de commutation de passage d'huile (**S2, S3, S4, 51, 57, 59**) en réponse au signal de changement dudit moyen de commande électronique (31) pour fournir une pression d'huile sélectivement auxdits asservissements (B1, B2)
dans lequel ledit circuit hydraulique comprend : ledit circuit d'alimentation en huile à limitation destiné à fournir la pression d'huile en passant par le moyen de limitation à huile (61); ledit circuit d'alimentation rapide en huile pour fournir la pression d'huile sans passer par ledit moyen de limitation à huile (61); une soupape à commutateur de passage d'huile adaptée à être commutée afin de connecter ledit circuit d'alimentation en huile à limitation et'ledit circuit d'alimentation rapide en huile sélectivement audit premier asservissement hydraulique (B1) et audit deuxième asservissement hydraulique (B2); et une première électrovanne (**S1**) destinée à commuter ladite soupape à interrupteur de passage d'huile en réponse au signal dudit moyen de commande électronique (31), et
dans lequel ledit moyen de commande électronique (31) comprend : des moyens (34) de décision de mise EN SERVICE/HORS SERVICE conçus pour décider quelle est la valeur de la charge motrice sur la base du signal détecté dudit capteur d'étranglement d'ouverture; et un moyen de commutateur de soupape (38) pour fournir un tel signal à ladite première électrovanne (**S1**), de manière à commuter ladite soupape à commutateur pour passage d'huile de manière que la pression d'huile dudit circuit d'alimentation rapide en huile soit fourni audit premier asservissement hydraulique (B1) et audit deuxième asservissement hydraulique (B2) lorsqu'il est décidé par ledit moyen (34) de décision de mise EN SERVICE/HORS SERVICE de la puissance que la charge motrice est élevée, tandis que la pression d'huile dudit circuit d'alimentation en huile à limitation est fournie au moins audit premier asservissement (B1), lorsqu'il est décidé que la charge motrice est faible.

3. Une transmission automatique selon la revendication 2,
dans laquelle ledit circuit hydraulique comprend en outre des moyens de régulation de pression (SLN, 55) destinés à réguler une pression de tuyauterie (P_{L}) à la valeur d'une pression de commande, et
dans laquelle ledit moyen de régulation de pression (SLN, 55) fournit l'huile à ladite pression de commande audit circuit d'alimentation en huile rapide afin d'ajuster les caractéristiques de transition de passage dudut premier asservissement hydraulique (B1) et dudit deuxième asservissement hydraulique (B2) alimentés par la pression d'huile dudit circuit d'alimentation rapide en huile.

4. Une transmission automatique selon la revendication 3, comprenant en outre des moyens de changement destinés à effectuer une sélection arbitraire entre une transmission automatique et une transmission manuelle,
dans laquelle ledit moyen de commutation de soupape (38) envoie à ladite première électrovanne (S1) un signal faisant commuter ladite soupape à commutation de pression d'huile, de manière que la pression d'huile dudit circuit d'alimentation rapide en huile soit fournie audit premier asservissement hydraulique (B1) et audit deuxième asservissement hydraulique (B2) lorsqu'il est décidé par lesdits moyens de décision (34) de mise EN SERVICE/HORS SERVICE de la puissance à la transmission manuelle sélectionnée par lesdits moyens de changement que la charge motrice est élevée, tandis que la pression d'huile dudit circuit d'alimentation en huile à limitation est fournie au moins audit premier asservissement hydraulique (B1) lorsqu'il est décidé que la charge motrice est faible.

5. Un système de commande pour une transmission automatique selon la revendication 4, comprenant en outre des moyens de détection de passage destinés à détecter que ledit moyen de changement est en fonctionnement,
dans lequel ledit moyen de commande électronique (31) comprend : des moyens de décision de changement (36) destinés à décider le type de changement sur la base du signal détecté venant dudit moyen de détection de changement; et des moyens de décision de schémas (37) conçus pour décider un motif de changement vers ledit rapport de transmission cible sur la base d'une pluralité de schémas de changement préparés par combinaison du résultat de décision venant desdits moyens de décision (34) de mise EN SERVICE/HORS SERVICE de la puissance et du résultat de décision venant dudit moyen de décision de passage (36), et
dans lequel lesdits moyens de commutation de soupape (38) envoient un signal destiné à commuter ledit moyen de commutation de passage d'huile (**S2, S3, S4, 51, 57, 59**) selon chacun des schémas de changement ayant été décidés par ledit moyen de décision de schémas (37).
